# EUROPEAN PATENT APPLICATION

(11) **EP 1 441 548 A2**
(43) Date of publication of application: **28.07.2004**
(21) Application number: 04250329.2
(22) Date of filing: 22.01.2004
(51) Int. Cl.: H04N 13/04

(54) **Apparatus for displaying three-dimensional image**

(30) Priority: 24.01.2003 JP 2003016668
(71) Applicant: Pioneer Corporation, Tokyo-to (JP)
(72) Inventor: Chuman, Takashi c/o Pioneer Corporation, Tsurugashima-shi Saitama-ken (JP); Uchida, Yoshihiko c/o Pioneer Corporation, Tsurugashima-shi Saitama-ken (JP); Satoh, Hideo c/o Pioneer Corporation, Tsurugashima-shi Saitama-ken (JP); Yoshizawa, Atsushi c/o Pioneer Corporation, Tsurugashima-shi Saitama-ken (JP); Hata, Takuya c/o Pioneer Corporation, Tsurugashima-shi Saitama-ken (JP); Yanagisawa, Shuuichi c/o Pioneer Corporation, Tsurugashima-shi Saitama-ken (JP)
(74) Representative: Townsend, Victoria Jayne

(57) **Abstract**

An apparatus for displaying a three-dimensional image of an object to be displayed, through a superimposing of a plurality of images of the object, which are placed so as to be apart from each other on a line of sight of an observer, comprises: the first display unit; the second display unit; and a bonding member. The first display unit has a first screen. The second display unit is disposed so as to face the first display unit. The second display unit has the second screen, which is light-transmissible. The bonding member connects the first display unit and the second display unit with each other. The bonding member has a light transmission property and is a bonding agent with which a space between the first display unit and the second display unit is filled.

## Description

### BACKGROUND OF THE INVENTION

### Field of the Invention

The present invention relates to an image display apparatus, which is provided with a plurality of display units disposed in tandem on a line of sight of an observer and controls images displayed on the respective display units so as to provide the observer with a three-dimensional image.

### Description of the Related Art

As conventional apparatuses capable of causing images to be recognized three-dimensionally, various types of such apparatuses are proposed or commercialized. For example, as an electrically rewritable apparatus capable of displaying images three-dimensionally, a liquid crystal shutter-glasses system, etc., is well known. This liquid crystal shutter-glasses system takes pictures of a three-dimensional object using a camera from different directions, combines image data including parallax information obtained into one image signal, inputs the signal into a two-dimensional display apparatus and displays it. An observer wears liquid crystal shutter-glasses, which, for example, allow light to pass through the right eye-liquid crystal shutter and cause the left eye-liquid crystal shutter to shield light for odd fields. On the other hand, the liquid crystal shutter-glasses allow light to pass through the left eye-liquid crystal shutter and cause the right eye-liquid crystal shutter to shield light for even fields. At this time, an image for the right eye is displayed in odd fields in synchronization with an image for the left eye in even fields so that the observer watches the images including parallax between the right eye and left eye through the respective eyes, and thereby obtains a three-dimensional image.

Furthermore, there is a display apparatus, which includes a plurality of display units that are disposed in tandem in a direction of the line of sight of the observer, allows the observer to watch those images displayed overlapped and thereby recognize the overlapped image as a three-dimensional image though those images are discrete images in the depth direction. On the other hand, there is a display apparatus, which provides variations for brightness of images displayed on two-dimensional display apparatuses to eliminate the situation of those discrete images so that the observer feels as if the object exists at a midpoint of discrete positions and has more naturally a feeling in three dimensions. For example, there is a proposal of a brightness modulation type three-dimensional display system which displays images of an object from a plurality of display apparatuses overlapped with one another using a plurality of half-mirrors and allows a semi-transparent object to be displayed or allows an object behind to be seen through, as described for example in Japanese Laid-Open Patent Application No. 2000-115812.

Such a display apparatus, which includes the display units that are disposed in tandem in the direction of the line of sight of the observer, however has a technical problem that part of light emitted from the display unit may be reflected on the other display unit when the light emitted from the former display unit passes through the latter display unit, thus making it difficult or impossible to provide an appropriate three-dimensional image to be displayed. More specifically, the surface of the display unit, which is placed on the closer side to an observer, reflects part of the light, which is emitted from the other display unit placed in front of the former display unit on the further side from the observer to be propagated to the observer. As a result, the observer recognized visually the light in an amount that is decreased by an amount of reflecting light. Therefore, the above-mentioned display apparatus involves the technical problems that the observer recognizes visually the image in different conditions such as brightness, luminosity and amount of light from those of the original image. In case of a brightness modulation type display apparatus, it is difficult to provide an appropriate three-dimensional image, unless the brightness for the display apparatus is previously determined in view of variation of brightness due to the above-mentioned reflection of light.

### SUMMARY OF THE INVENTION

An object of the present invention, which was made in view of the above-described problems, is therefore to provide a display apparatus, which permits to transmit light emitted from one of the display units so as to be recognized visually by an observer in an appropriate manner, thus enabling the observer to recognize visually the three-dimensional image.

In order to attain the aforementioned object, an apparatus according to one aspect of the present invention for displaying a three-dimensional image of an object to be displayed, through a superimposing of a plurality of images of said object, which are placed so as to be apart from each other on a line of sight of an observer, comprises:
a first display unit having a first screen;
a second display unit disposed so as to face said first display unit, said second display unit having a second screen, which is light-transmissible; and
a bonding member for connecting said first display unit and said second display unit with each other, said bonding member having a light transmission property and being a bonding agent with which a space between said first display unit and said second display unit is at least partially filled.

In order to attain the aforementioned object, an apparatus according to another aspect of the present invention comprises:
a first display unit comprising a first substrate and a first luminescent layer formed on said first substrate to emit light for displaying a first image;
a second display unit comprising a second substrate, which is disposed to face said first substrate and has a light transmission property, and a second luminescent layer formed on said second substrate to emit light for displaying a second image to be superimposed on said first image,
wherein said first luminescent layer and said second luminescent layer are placed so as to be apart from each other on a line of sight of an observer, said first display unit being joined to an opposite surface of said second substrate to said second luminescent layer.

### BRIEF DESCRIPTION OF THE DRAWINGS

FIG. 1 is a block diagram illustrating a display apparatus according to the example of the present invention;
FIG. 2 is a diagrammatic view illustrating conceptually a light transmission path in the display apparatus according to the example of the present invention;
FIG. 3 is a diagrammatic view illustrating conceptually a light transmission path in the conventional display apparatus, which is a comparative example to the display apparatus according to the example of the present invention;
FIG. 4 is a diagrammatic view illustrating conceptually a concrete example in structure of the display apparatus according to the example of the present invention;
FIG. 5 is a diagrammatic view illustrating conceptually another concrete example in structure of the display apparatus according to the example of the present invention; and
FIG. 6 is a diagrammatic view illustrating conceptually further another concrete example in structure of the display apparatus according to the example of the present invention.

### DETAILED DESCRIPTION OF THE PREFERRED EMBODIMENTS

Embodiments of the present invention will be described below.

An apparatus according to the first embodiment of the present invention, for displaying a three-dimensional image of an object to be displayed, through a superimposing of a plurality of images of the object, which are placed so as to be apart from each other on a line of sight of an observer, comprises: a first display unit having a first screen; a second display unit disposed so as to face the first display unit, the second display unit having a second screen, which is light-transmissible; and a bonding member for connecting the first display unit and the second display unit with each other, the bonding member having a light transmission property and being a bonding agent with which a space between the first display unit and the second display unit is filled.

In the first embodiment according to the display apparatus of the present invention, forming images for the three-dimensional display with the use of the first screen (i.e., the first display unit), which is placed on the further side from an observer, and the second screen (i.e., the second display unit), which is placed on the closer side to the observer, and superimposing these images on each other on his/her line of sight make it possible to provide the three-dimensional display. More specifically, the observer can recognize visually the three-dimensional image. According to a brightness modulation-type three-dimensional display system, for example, there can be provided a continuous three-dimensional display in which allocation of brightness of images of the same object, which are to be displayed on the first and second display units (which may be referred to as the "two display units"), causes an observer to recognize visually one of the images behind the other thereof. Alternatively, there can be provided a discrete three-dimensional display system in which image sections are displayed discretely on any one of the two display units. There can also be provided a continuous or discrete three-dimensional display in which an observer recognizes visually the image as if it exists in one of three or more display units.

When the two display units are isolated from each other by a space to form an air layer between them, light emitted from the screen (i.e., the first screen) of the display unit, which is placed on the further side from the observer, propagates through the air layer and is then transmitted to the screen (i.e., the second screen) of the display unit, which is placed on the closer side to the observer, so as to be recognized visually by the observer.

It is known that the air layer has the relatively smaller refractive index in comparison with material of which the screen is formed (for example, quartz) and light, which is launched from a medium having a certain refractive index into another medium having a smaller refractive index than the above-mentioned certain refractive index, in a perpendicular direction to the above-mentioned another medium, is reflected on the boundary surface of these different two media. Accordingly, part or the whole of the light, which is launched from the first screen into the second screen through the air layer, is reflected on the surface of the second screen. Such reflection remarkably reduces an amount of light, which is transmitted from the first screen to the second screen, thus causing serious variation in conditions such as brightness, luminosity and amount of light of the image to be formed by the light. Such a phenomenon becomes a serious problem in a three-dimensional display system utilizing a brightness adjustment.

However according to the first embodiment of the display apparatus of the present invention, the space between the two display units (i.e., the two screens) is filled with the bonding agent to connect these two screens to each other. Accordingly, it is possible to prevent any air layer from existing between the two screens, thus avoiding the above-mentioned reflection of light on the boundary surface between the air layer and the second screen. More specifically, filling the space between the second screen and the air layer, which causes differences in refractive index between the air layer and the second screen to produce the reflection of light on the boundary surface, thus providing unfavorable phenomenon, with the bonding agent, removes the air layer from the above-mentioned space. In addition, the refractive index of the bonding agent is adjusted so that difference in refractive index between the bonding agent (i.e., the bonding member) and the second screen becomes small, and preferably null. The above-mentioned reflection of light can be reduced accordingly. Filling the entire space between the two display units with the bonding agent having the predetermined refractive index makes it possible to reduce remarkably or prevent completely the reflection of light. As a result, the light emitted from the first screen can be propagated without attenuation. This enables an observer to recognize visually the image displayed on the first screen in a state in which the original brightness, luminosity and amount of light for the image are kept as they are. The observer can therefore recognize visually the images displayed on the two display units in an appropriately superimposed state. More specifically, the observer can recognize visually the three-dimensional image.

The bonding agent with which the space between the two display units is to be filled, may be a transparent material or medium, which contains for example glass material or resin material and has the predetermined refractive index. Alternatively, the bonding agent may be an optical adhesive by which the two display units can be bonded directly to each other.

The number of the display units is not limited only to two, but three or more display units may be disposed in tandem on an observer's line of sight. In this case, the bonding agent bonds each pair of adjacent two display units to each other. This makes it possible to reduce the reflection of light between the adjacent two display units, even when the display apparatus is provided with the three or more display units. Accordingly, the observer can recognize visually the three-dimensional image.

In the above-described first embodiment of the present invention, filling the space between the two display units with the bonding agent to bond them to each other in the same manner as described above can provide the same technical effects, even in any other suitable three-dimensional display system than the brightness modulation type thee-dimensional display system.

In the mode in which the two display units are bonded to each other by means of the bonding agent, merely making a positional determination of the two display units (e.g., the position of the pixels of the two display units) utilizing an optical microscope and then bonding the two display units to each other make it possible to manufacture the display apparatus (i.e., the apparatus for the three-dimensional display) provided with the plurality of display units. This eliminates the need for a complicated manufacturing step such as a step for aligning the display units utilizing a large-scaled apparatus, with the result that simplification of the manufacturing line and reduction of manufacturing costs can be achieved to provide the display apparatus at low cost, thus causing great advantageous effects in practice. In addition, simplification of the structure itself of the display apparatus leads to simplification of the manufacturing steps, so as to be adapted to mass production of the display apparatus, thus causing great advantageous effects in practice.

In one of modes of the first embodiment of the display apparatus according to the present invention, the first display unit may comprise: a first substrate; and a first luminescent layer formed on the first substrate, the first luminescent layer emitting light so as to provide the first screen; and the second display unit may comprise: a second substrate having a light transmission property; and a second luminescent layer formed on the second substrate, the second luminescent layer emitting light so as to provide the second screen.

In such a mode, it is possible to achieve the embodiment according to the display apparatus of the present invention with the use of a display device such as an organic electroluminescence display device, which includes a substrate and an organic electroluminescence layer formed on the substrate so as to server as the luminescent layer. The term "electroluminescence" may be hereinafter referred to as "EL". The organic EL display device is a display device, which has the light-transmission property and is suitable to achieve the display apparatus according to the embodiment of the present invention.

The second substrate having the light transmission property contains for example glass or plastic component. Accordingly, the second display unit having the light transmission property can be provided. It is therefore possible to place directly the first luminescent layer and the second luminescent layer in tandem on an observer's line of sight so that the bonding member (i.e., the bonding agent is placed between these luminescent layers). The first substrate may have the light transmission property or may not have it.

In this case, the bonding agent may bond the first and second substrates to each other, or the first and second luminescent layers to each other. Alternatively, the bonding agent may bond the first substrate and the second luminescent layer to each other, or the second substrate and the first luminescent layer to each other.

In addition, each of the first substrate and the second substrate may have a function of lens, or a function of transformation for various kinds of images, such as a color transformation function. More specifically, each of the first substrate and the second substrate may include for example a lens array, or a color conversion filter. When the image displayed on the first or second display unit (i.e., a bunch of light emitted from the luminescent layer) is recognized visually through the substrate having the above-mentioned functions, it is possible to achieve relatively easily various modes of the image display in place of or in addition to the image display according to the normal image processing carried out by means of a microcomputer.

In the mode of the display apparatus in which the display unit comprises the substrate and the luminescent layer, the bonding member may be disposed between the first display unit and an opposite surface of the second substrate to the second luminescent layer, to bond the first display unit and the second substrate together.

In the three-dimensional display system utilizing the plurality of display units, stereognostic visual sense, which is found by an observer, depends on the distance between the display units (i.e., the distance between the luminescent layers of the display units). In other words, there is a suitable distance between the display units to provide the appropriate three-dimensional display.

Such a structure makes it possible to place the first and second screens (i.e., the first and second luminescent layers) apart from each other by a distance corresponding to the total thickness of the second substrate and the bonding member. Determining the predetermined thickness of the second substrate and the predetermined thickness of the bonding member enables the first display unit and the second display unit to be disposed so as to be apart from each other by the desired distance, which is suitable for the three-dimensional display. In the first display unit, the opposite surface of the first substrate to the first luminescent layer may be bonded to the second display unit, or the surface of the first substrate, on which the first luminescent layer is formed, may be bonded to the second display unit.

It is therefore possible to display appropriately the images for the three-dimensional display on the two display units, which are placed apart from each other by the predetermined distance, which is suitable for the three-dimensional display, thus enabling an observer to recognize visually the three-dimensional image in an appropriate manner.

Alternatively, in the case of the display apparatus provided with three or more display units, determining the thickness of the substrates of each pair of adjacent display units and the thickness of the bonding member by which each pair of adjacent display units are bonded to each other, can achieve the apparatus for three-dimensional display in which each pair of adjacent display units are placed so as to be apart from each other by the predetermined distance, which is suitable for the three-dimensional display.

In the other mode than the above-mentioned, it is possible for an observer to recognize visually the three-dimensional image by filling the space between the two display units with the bonding agent to bond them to each other, so as to dispose the two display units apart form each other by the predetermined distance, which is suitable for the three-dimensional display.

In the mode of the display apparatus in which the opposite surface of the second substrate to the second luminescent layer is bonded to the first substrate, the first substrate may have a light transmission property; and the bonding member may be disposed between the first display unit and the second display unit to cause an opposite surface of the first substrate to the first luminescent layer and the opposite surface of the first substrate to the first luminescent layer to bond together.

Such a structure enables the first and second luminescent layers to be apart from each other by the distance corresponding to the total thickness of the first and second substrates and the bonding member. Determining the total thickness of the first and second substrates and the bonding member makes it possible to dispose the first and second display units apart from each other by the predetermined distance, which is suitable for the three-dimensional display.

In such a mode, the substrates are bonded together, thus making it possible to carry out a bonding step for the two display units utilizing the bonding agent in a relatively easy manner. More specifically, the first embodiment according to the display apparatus of the present invention can be achieved relatively easily merely by bonding the first and second substrates for example containing glass material through the bonding agent including an optical adhesive. It is therefore possible to manufacture relatively easily the display apparatus according to the first embodiment of the present invention, thus causing great advantageous effects in practice.

In the mode of the display apparatus in which the display unit comprises the substrate and the luminescent layer, the bonding member may have the same refractive index as that of at least one of the first substrate and the second substrate.

In such a structure, the bonding member having the predetermined refractive index makes it possible to prevent effectively reflection of light due to difference in refractive index between the bonding member and the substrate. Therefore, an observer can recognize visually the light as emitted from the display unit without any variation.

In an example case where the opposite surface of the first substrate to the luminescent layer is bonded to the opposite surface of the second substrate to the luminescent layer to each other, equality in refractive index between the bonding member and the second substrate enables to reduce or prevent completely the reflection of light emitted from the first luminescent layer on the boundary surface between the bonding member and the second substrate. Equality in refractive index between the bonding member and the first substrate enables, in place of or in addition to the above-described equality, enables to reduce or prevent completely the reflection of light on the boundary surface between the bonding member and the first substrate.

Accordingly, it becomes possible to reduce or prevent effectively variation in brightness, luminosity and amount of light of the image, caused by the reflection of light. It is therefore possible to display the images in a superimposed state under the same conditions that the original brightness, luminosity and amount of light are kept as they are. As a result, an observer can recognize visually the three-dimensional image.

In the present invention, the term "the same refractive index" not only means literally equality of values of the refractive index, but also includes a certain relationship in refractive index among the bonding member, and the first and second substrates, which enables an observer to recognize visually the three-dimensional image. More specifically, approximation of the refractive index within a predetermined range causes the light reflection on the boundary surface between the bonding member and the first and second substrates to a negligible extent that any serious problems in enabling an observer to recognize visually the appropriate image do not occur. It is therefore possible for the observer to recognize visually the three-dimensional image.

In another mode of the first embodiment according to the display apparatus of the present invention, the bonding agent may be an optical adhesive.

In such a mode, it is possible to remove the air layer from the space between the two display units with the use of the optical adhesive, which can be handled easily, in a relatively easy manner and bond the two display units to each other. Using a most suitable or desired kind of optical adhesive in view of the refractive index, heat resistance or moisture resistance of the optical adhesive, makes it possible to bond the two display units to each other in accordance with the applied mode of the display apparatus.

The optical adhesive may be for example an epoxy resin optical adhesive or an acrylate resin optical adhesive. The other optical adhesive may be used. Such an optical adhesive is cured by irradiation of light or application of heat. A suitable optical adhesive may be properly selected from the optical adhesives, which are relatively available or can be handled easily, in accordance with the applied mode of the embodiment according to the display apparatus of the present invention.

Alternatively, placing a transparent member having the predetermined refractive index, in addition to or in place of the above-mentioned optical adhesive, between the two display units so as to form no space between these units and bonding such transparent member to the two display units can provide the same technical effects.

The apparatus according to the second embodiment of the present invention, for displaying the three-dimensional image, comprises: a first display unit comprising a first substrate and a first luminescent layer formed on the first substrate to emit light for displaying a first image; a second display unit comprising a second substrate, which is disposed to face the first substrate and has a light transmission property, and a second luminescent layer formed on the second substrate to emit light for displaying a second image to be superimposed on the first image, wherein the first luminescent layer and the second luminescent layer are placed so as to be apart from each other on a line of sight of an observer, the first display unit being joined to an opposite surface of the second substrate to the second luminescent layer.

In the second embodiment according to the display apparatus of the present invention, the three-dimensional display can be provided in the similar manner to the above-described first embodiment according to the display apparatus of the present invention. More specifically, it is therefore possible for an observer to recognize visually the first and second images displayed on the respective first and second display units in a superimposed state on his/her line of sight in an appropriately adjusted brightness, thus providing a proper visual recognition of the three-dimensional image.

Especially, in the second embodiment of the present invention, there can be adopted a mode in which the two display units are connected directly to each other, thus providing the similar effects to the first embodiment of the present invention in a relatively easy manner. In an example case, providing the surface of the first display unit with a certain shape, and providing the surface of the second substrate of the second display unit with a corresponding shape, which can be fitted to or engaged with the above-mentioned certain shape in an appropriate manner, enables the two display units to be appropriately joined together without using any specific member. Joining the first and second display units together under pressure and/or with application of heat so that the corresponding surfaces are fitted to or engaged with each other suffices, thus eliminating the need for using the adhesive.

In addition, the first and second display units are joined together without any bonding member in a different manner from the first embodiment of the present invention, thus reducing remarkably the distance between the first and second display units. More specifically, only consideration of the boundary surface between the first and second display units suffices in order to reduce or prevent completely the reflection of light. When the substrates, which are formed of the same material having a certain refractive index, are used as the first and second substrates of the respective first and second display units, it is possible to reduce or prevent relatively easily the reflection of light on the boundary surface in the similar manner to the first embodiment of the present invention.

In addition, utilizing the thickness of the first substrate makes it possible to place the first and second luminescent layers (i.e., the first and second images) away from each other by the distance corresponding to the thickness of the second substrate. More specifically, setting the thickness of the second substrate to the predetermined thickness makes it possible to dispose the first and second display units away from each other by the predetermined distance, which is suitable for the three-dimensional display. The opposite surface of the first substrate of the first display unit to the first luminescent layer may be joined to the second display unit, or the surface of the first substrate, on which the first luminescent layer is formed, may be joined to the second display unit.

This makes it possible to display appropriately the images for the three-dimensional display on the two display units, which are spaced apart from each other by the distance, which is suitable for the three-dimensional display, thus enabling an observer to recognize visually the three-dimensional image.

Alternatively, in the case of the display apparatus provided with three or more display units, determining the thickness of the substrates of each pair of adjacent display units can achieve the apparatus for three-dimensional display in which each pair of adjacent display units are placed so as to be apart from each other by the predetermined distance, which is suitable for the three-dimensional display.

In the other mode than the above-mentioned, joining the two display units so as to enable an observer to recognize visually the images, which are displayed away from each other by the predetermined distance on the respective display units, makes it possible for an observer to recognize visually the three-dimensional image.

In one of modes of the second embodiment of the display apparatus according to the present invention, the first substrate may have a light transmission property; and the opposite surface of the second substrate to the second luminescent layer may be joined to an opposite surface of the first substrate to the first luminescent layer.

Such a structure makes it possible to place the first and second luminescent layers apart from each other by a distance corresponding to the total thickness of the first and second substrates. Determining the predetermined thickness of the first and second substrates enables the first display unit and the second display unit to be disposed so as to be apart from each other by the desired distance, which is suitable for the three-dimensional display. In this case, the first substrate contains for example glass material so as to have the light-transmission property.

Providing the surfaces of the respective first and second substrates, which are joined to each other, with uniformly flat portions or portions to be engaged with each other, enables the first and second display units to be joined to each other in an appropriate and easy manner. It is therefore possible to manufacture relatively easily the display apparatus according to the second embodiment of the present invention, thus causing great advantageous effects in practice. Even when the surfaces of the respective first and second substrates do not have any portions, which can be engaged with each other, using the optical adhesive makes it possible to join the first and second display units in an appropriate and easy manner.

In the other mode of the first and second embodiments of the display apparatus of the present invention, the first substrate may have a larger refractive index than that of the second substrate.

The light-transmission property of the second substrate may cause the light emitted from the second display unit to be launched not only to the side of an observer, but also to the opposite side to him/her. This may cause a problem that part of the light emitted from the second display unit may not be recognized visually by the observer, thus making it difficult or impossible to utilize all amount of light as emitted.

In the above-mentioned mode, it is however possible to reflect the light, which is to be launched to the opposite side to the observer, in the middle of the transmission path, so as to propagate the above-mentioned light to the side of the observer.

More specifically, in an example case where the first and second display units are disposed so that the opposite surface of the first substrate to the first luminescent layer is joined to the opposite surface of the second substrate to the second luminescent layer, the first substrate has the larger refractive index than the second substrate with the result that the light, which is emitted from the second display unit and then to be launched to the opposite side to the observer, is transmitted through the second substrate to be propagated to the first substrate. This case meet the requirement that light is launched from a medium having a certain refractive index into another medium having a large refractive index than the above-mentioned certain refractive index. Accordingly, the light is reflected on the boundary surface between these media. More specifically, the light is reflected on the surface of the first substrate and then launched to the side of the observer. As a result, the light emitted from the second display unit is properly propagated to the side of the observer. It is therefore possible to utilize effectively the light emitted from the second display unit.

Even when the first and second display units are joined to each other by the adhesive, making the refractive index of the adhesive equal to that of any one of the first and second substrates enables the light, which is emitted from the second display unit and then to be launched to the opposite side to the observer, to be reflected in the middle of the transmission path, thus providing propagation of light to the observer. Accordingly, the light emitted from the second display unit can be utilized effectively.

In either case, all amount of light emitted from the second display unit can be launched to the side of the observer, thus providing an effective utilization of the light as emitted.

In addition, the light emitted from the first display unit to be launched to the side of the observer is transmitted through the first substrate having the relatively large refractive index and then launched into the second substrate having the relatively small refractive index, thus making it possible to prevent the reflection of light on the boundary surface. It is therefore possible to prevent attenuation of the light due to the reflection, thus providing an effective utilization of the light as emitted from the luminescent layer of the first display unit.

As a result, making the refractive index of the first substrate larger than that of the second substrate can provide an effective utilization of the light as emitted from the second display unit. In addition, it is also possible to prevent the light, which is emitted from the first display unit, from being reflected on the boundary surface so as to avoid attenuation of light, thus providing an effective utilization of the light. It is therefore possible to effectively utilize the lights emitted from the first and second display units, without wasting, thus displaying the images.

Even when the opposite surface of the first substrate to the luminescent layer and the opposite surface of the second substrate to the luminescent layer are not adhered or joined to each other, the lights emitted from the first and second display units can be utilized in a certain extent.

In the other mode of the first and second embodiments of the display apparatus of the present invention, at least one of the first substrate and the second substrate may contain at least one of glass and plastic.

In such a mode, at least one of the first substrate and the second substrate contains at least one of glass and plastic, thus enabling the substrate having the light transmission property to be used relatively easily.

In addition, forming the substrate of a composite of glass and plastic and adjusting the mixing ratio thereof in a desired manner make it possible to set the refractive index of the substrate to the desired value. It is therefore possible to adjust relatively easily the refractive indexes of the first substrate and the second substrate to the desired values so that the refractive indexes of the first and second substrates and the bonding member satisfy the above-mentioned relationship.

In the other mode of the first and second embodiments of the display apparatus of the present invention, the first display unit and the second display unit may be disposed on the line of sight of the observer so that pixels of the first display unit correspond to pixels of the second display unit, respectively.

In such a mode, the images on the respective first and second display units can be superimposed appropriately on each other so that the pixels of the first display unit correspond to the pixels of the second display unit, respectively. More specifically, it is possible for an observe to recognize visually the images for three-dimensional display, which have been adjusted so as to be superimposed on each other for each pixel. Accordingly, the observer can recognize visually the three-dimensional image in a more appropriate manner.

It is preferable that each of the pixels of the first display unit has the same size as the pixels of the second display unit. Even when the pixel of the first display unit and the pixel of the second display unit are different in size from each other, it is however possible for an observer to recognize visually the images, which are superimposed appropriately on each other. It is also possible to make the pixels of the first display unit, which is placed on the further side from an observer, slightly larger than the pixels of the second display unit, which is placed on the closer side to the observer, so that the pixels of the first display unit and the pixels of the second display unit have the same apparent size on the observer's line of sight.

In the other mode of the first and second embodiments of the display apparatus of the present invention, the second display unit may comprise an organic electroluminescence display device.

In such a mode, the three-dimensional display can be achieved with the use of the second display unit of a semi-transparent panel type display unit, which is composed of the organic EL display device.

The organic EL display device may be a bottom emission type, a top emission type or a transparent type. Here, the "bottom emission type" device is an organic EL display device in which light emitted for example from an organic EL luminescent layer described later is transmitted for example to an ITO electrode side described later (i.e., the substrate side). The "top emission type" device is an organic EL display device in which light emitted for example from the organic EL luminescent layer described later is transmitted to a cathode side described later (i.e., the opposite side to the substrate). The "transparent type" device is an organic EL display device in which light emitted for example from the organic EL luminescent layer described later is transmitted to both of the cathode side described later and the ITO electrode side. The organic EL display device may be an active matrix drive type or a passive matrix drive type.

Use of any type of the organic EL display device can provide the same effects as the first or second embodiment according to the display apparatus of the present invention.

The first display unit may be a semi-transparent display unit, or an opaque display unit such as a cathode ray tube, a liquid crystal display, a field emission display or a plasma display since the first display unit does not need to be light-transmissible.

In the mode in which the display apparatus is provided with three or more display units, the display units excepting the display unit, which is placed on the furthest side from an observer, must be the display device have the light-transmission property, such as the organic EL display device. The display unit, which is placed on the furthest side from the observer, may be a semi-transparent or opaque display device.

In the mode in which the second display unit comprises the organic EL display device, the second substrate may comprise a polymer film.

In such a structure, use of the second substrate, which includes a polymer film containing for example polycarbonate or polyethylene terephthalate can provide the sheet type second display unit, which is freely bendable and flexible.

This enables the display apparatus to be further downsized, thus providing a suitable display apparatus for a cellular phone or a PDA (Personal Digital Assistance) in which miniaturization or portability is required.

In addition, using the organic EL display device, which is provided with the first substrate including a polymer film, for the first display unit, can achieve the display apparatus for three-dimensional display, which is freely bendable and flexible. The display apparatus having the excellent portability can therefore be provided.

According to the first embodiment of the display apparatus of the present invention, the display apparatus comprises the first display unit, the second display unit and the bonding member. According to the second embodiment of the display apparatus of the present invention, the display apparatus comprises the first display unit and the second display unit, which are joined to each other. It is therefore possible to reduce or prevent completely the reflection of light emitted from the first display unit, thus enabling an observer to recognize visually the images in a superimposed state under the same conditions that the original brightness, luminosity and amount of light are kept as they are. As a result, an observer can recognize visually the three-dimensional image. According to the first and second embodiments according to the display apparatus of the present invention, the same effects can be provided also in the display of moving images and static images, and more specifically, the observer can recognize visually the three-dimensional image.

The operations and other advantages of the present invention will become more apparent from the following examples.

### EXAMPLES

With reference now to the attached drawings, examples of the display apparatus according to the present invention will be described below.

### [Fundamental structure of the display apparatus]

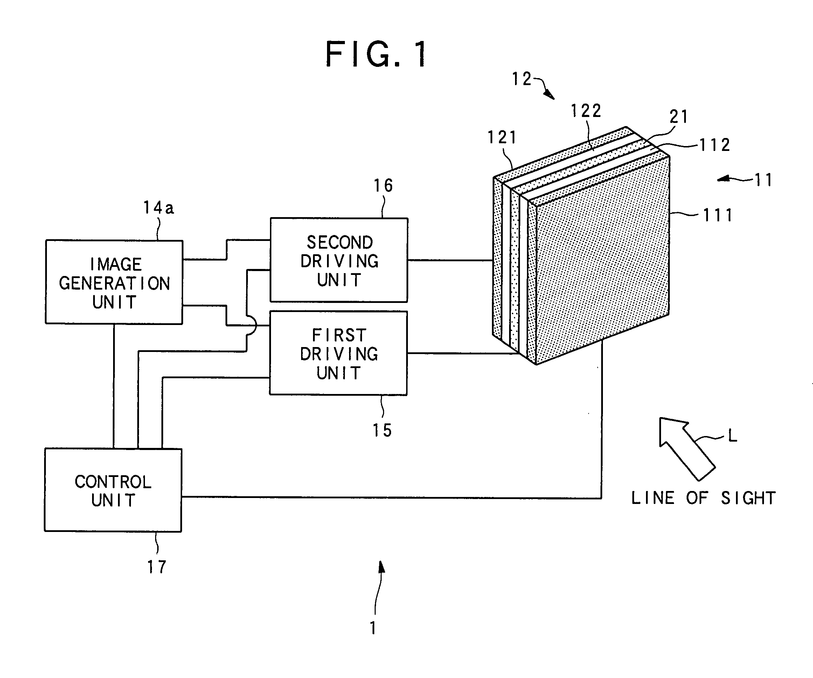

Description will be given below of the fundamental structure of the display apparatus according to the example of the present invention with reference to FIG. 1. FIG. 1 is a block diagram showing the structure of the display apparatus 1 according to the example of the present invention

The display apparatus 1 includes a front screen 11, which serves as an example of the "second display unit"; a rear screen 12, which is disposed behind the front screen 11 and serves as an example of the "first display unit"; an image generation unit 14 for generating images to be displayed on the front screen 11 and the rear screen 12; the first driving unit 15 for supplying an image signal from the image generation unit 14 to the front screen 11 to display an image thereon; the second driving unit 16 for supplying an image signal from the image generation unit 14 to the rear screen 12 to display an image thereon; a bonding layer 21 (i.e., a bonding member) by which the front screen 11 and the rear screen are bonded to each other; and a control unit 17 for controlling entirely the display apparatus 1, as shown in FIG. 1.

The front screen 11 and the rear screen 12, which form an image display component of the display apparatus 1, are placed so as to be apart from each other by a predetermined distance, which corresponds to the thickness of the bonding layer 21, on a line "L" of sight of an observer. The front screen 11 is composed of a luminescent layer 111 and a substrate 112, and the rear screen 12 is composed of a luminescent layer 121 and a substrate 122. The luminescent layers 111, 121 actually emit light to display images. The substrates 112, 122, which contain glass or plastic component, protect and hold the luminescent layers 111, 121. At least one of the substrates 111, 121 may a function of lens, or a function of transformation for various kinds of images, such as a color transformation function.

The front screen 11 is disposed on the front side and the rear screen 12 is disposed on the rear side. A display device having a light transmission property, such as an electroluminescent display device is used as the front screen 11, in order to make it possible for an observer to recognize the image displayed on the rear screen 12 through the front screen 11. On the other hand, the rear screen 12 may be such a liquid crystal display device or electroluminescent display device, or a CRT (cathode ray tube) display device, a plasma display device or an FED (field electron emission) display device, in view of the fact that the rear screen 12 is not required to be light-transmissible.

Displaying the images on the respective front and rear screens enables the observer to recognize visually a three-dimensional image, although discrete. Alternatively, adjusting brightness of the images causes the three-dimensional image to be displayed so as to enable the observer to recognize visually as if the three-dimensional image is located between the front screen 11 and the rear screen 12. Accordingly, a brightness modulation type three-dimensional display is also available.

In addition, adjustment is made so that the substrates 112, 122, and the bonding layer 21 have the predetermined thickness, thus enabling the luminescent layers 111, 121 to be disposed apart from each other by the predetermined distance, which is suitable for the three-dimensional display.

The image generation unit 14 generates the image to be displayed on the front screen 11 and the rear screen 12 and stores such an image. Alternatively, any image, which has externally been inputted, for example, an image, which has been formed by a personal computer, may be stored in a predetermined storing area so that image data can be read out, as an occasion demands. The images as a unit are controlled independently of one another and can be processed to display them independently. An independent control can be made not only on which screen 11 or 12 the image is to be displayed, but also in a position, intensity (i.e., brightness), luminous intensity (i.e., chromaticity), hue, mode and change in image of the display.

The first driving unit 15 and the second driving unit 16, which serve as a driver for the display on the respective front and rear screens 11, 12, supplies the image signals, which have been generated by the image generation unit 14, to the respective front and rear screens 11, 12 to display the images thereon. The first and second driving units 15, 16 may have a function of carrying out a decorative and effective display driving with a display timing or flashing.

The control unit 17 controls entirely the display apparatus 1. With respect to the display of three-dimensional image, the control unit 17 sets the display modes of the front and rear screens 11, 12, for example, brightness and intensity of the screen- section, and causes the image generation unit 14 to generate the image signals to be displayed on the respective front and rear screens 11, 12. In addition, the control unit 17 controls operation of the first driving unit 15 and the second driving unit 16.

In the embodiment of the present invention, the bonding layer stationarily bonds the front and rear screens 11, 12 to each other so that images displayed on the respective front and rear screens 11, 12 are superimposed appropriately on each other on an observer's line "L" of sight. Light emitted from the rear screen 12 is transmitted through the bonding layer 21 and the front screen 11, and then recognized visually by the observer. The front and rear screens 11, 12 (i.e., the luminescent layer 111 of the front screen 11 and the luminescent layer 121 of the rear screen 12 in this case) are held so as to be apart from each other by the predetermined distance, which corresponds to the total thickness of the bonding layer 21, the substrate 112a of the front screen and the substrate 122 of the rear screen 12.

An optical adhesive is used as the bonding layer 21, in order to bonding the front and rear screens 11, 12 directly to each other. Alternatively, a transparent member, which is formed for example of glass or resin and has the predetermined refractive index, may be placed between these screens 11, 12 and bonded thereto in a different manner from the above-described case in which the front and rear screens 11, 12 are bonded directly to each other. In either case, it is preferable that the bonding layer 21 has the same refractive index as that of at least any one of the substrates 112, 122.

The above-mentioned bonding layer 21 enables the apparatus suitable for the three-dimensional display to be achieved in the manner as described below.

### [Principle of operation of the display apparatus]

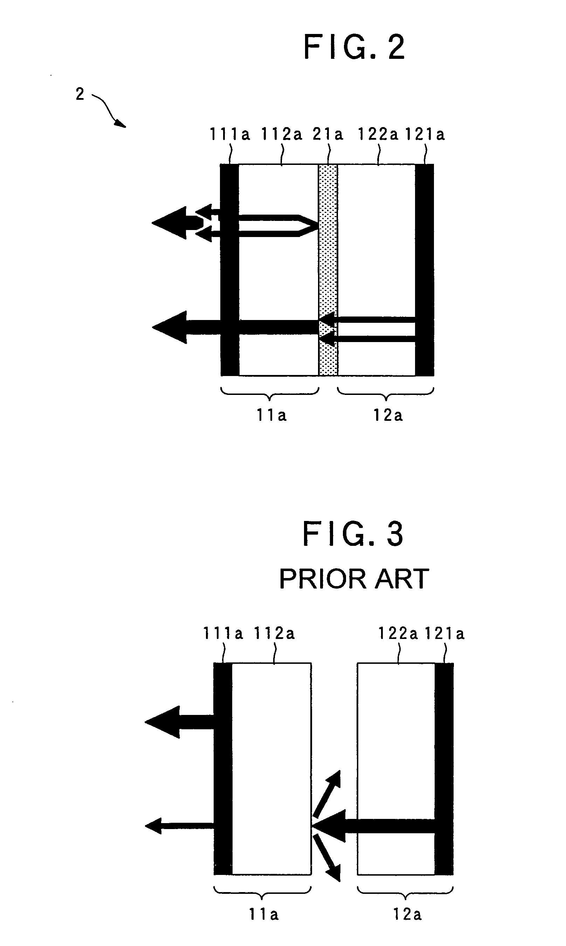

Now, description will be given below of a principle of operation of the display apparatus according to the example of the present invention with reference to FIGS. 2 and 3. FIG. 2 is a diagrammatic view illustrating conceptually a light transmission path in the display apparatus according to the example of the present invention; and FIG. 3 is a diagrammatic view illustrating conceptually a light transmission path in the conventional display apparatus, which is a comparative example to the display apparatus according to the example of the present invention. In the description referring to FIGS. 2 and 3, the organic EL display device is used as an example of the front and rear screens 11, 12. Only the front screen 11, the rear screen 12 and the bonding layer 21, which are extracted from the structural components as shown in FIG. 1, will be described in detail below.

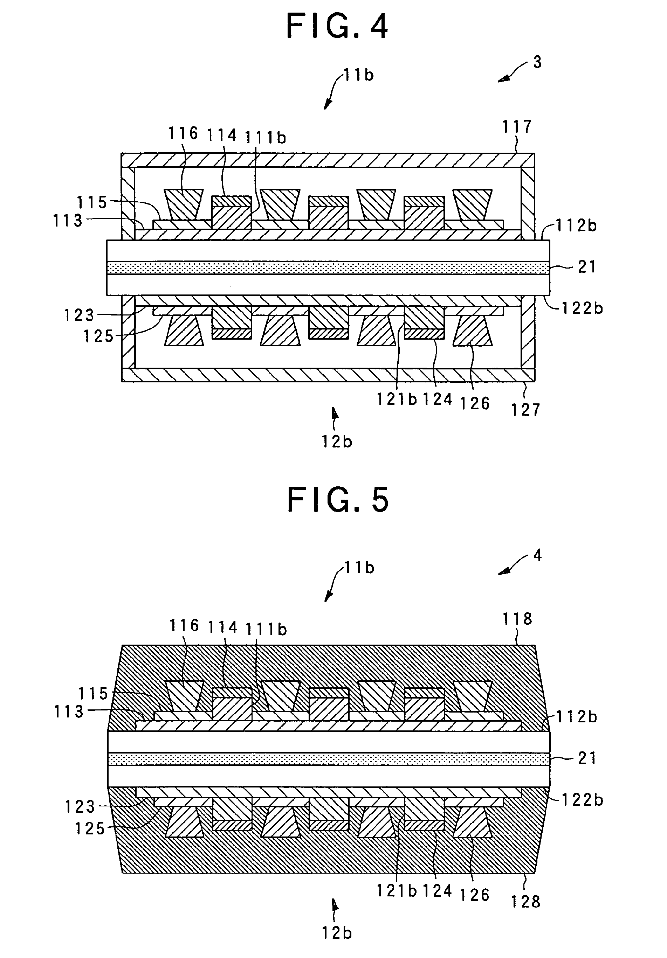

The display apparatus 2 according to the example of the present invention has the structure as shown in FIG. 2. The transparent type organic display device, which is composed of the organic EL luminescent layer 111a and the substrate 112a and has the light-transmission property, is used as the front screen 11a. The bottom emission type organic EL display device, which is composed of the organic EL luminescent layer 121a and the substrate 122a and has no light-transmission property, is used as the rear screen 12a. The rear screen 12a having no light-transmission property is provided with a metallic electrode (see FIG. 4) described later, which can reflect light emitted from the organic EL luminescent layer 121a to the side of an observer.

The front screen 11a and the rear screen 12a are bonded to each other by means of an optical adhesive 2 1a, which serves as the bonding layer 21 and has the light-transmission property. The light emitted from the rear screen 12a is propagated through the optical adhesive 21a to the front screen 11 a. The optical adhesive 21a may be for example an epoxy resin optical adhesive or an acrylate resin optical adhesive. The other optical adhesive may be used.

The substrate 112a of the front screen 11a has a smaller refractive index than the substrate 122a of the rear screen 12a. The optical adhesive 21a held between the two substrates 112a, 122a has a refractive index, which is the same as one of the substrate 112a and the substrate 122a. The organic EL display device applied as the front and rear screens 11, 12 may be an active matrix drive type or a passive matrix drive type.

There is an assumption that the optical adhesive 21a has the same refractive index as the substrate 122a. The rear screen 12a has no light-transmission property. Accordingly, light emitted from the organic EL luminescent layer 121a may be classified into light, which is to be launched to the side of an observer, and light, which is to be launched to the opposite side to the observer. More specifically, the light in an amount of 50 % of the light emitted from the organic EL luminescent layer 121a is launched to the side of the observer, and the remaining light in an amount of 50 % is launched to the opposite side to the observer. The light, which is to be launched to the side of the observer, is actually propagated through the optical adhesive 21a and the substrate 112a to the side of the observer. On the other hand, the light, which is to be launched to the opposite side to the observer, is actually reflected on the metallic electrode (see FIG. 4) described later, and then propagated through the optical adhesive 21a and the substrate 112a to the side of the observer.

In this case, reflection of light does not occur on the boundary surface between the substrate 122a and the optical adhesive 21a, due to equality in refractive index of the substrate 122a and the optical adhesive 21a. Also, reflection of light does not occur on the boundary surface between the optical adhesive 21a and the substrate 112a, due to the fact that the optical adhesive 21a has a larger refractive index than the substrate 112a. More specifically, it is possible to utilize, without wasting, both of the lights, which have been emitted in the opposite directions from the organic EL luminescent layer 121a, although there is a slight attenuation of light during propagation in the substrate 122a, the optical adhesive 21a and the substrate 112a. This enables an observer to recognize visually the light emitted from the organic EL luminescent layer 121a in a state in which the original brightness, luminosity and amount of light for the image are kept as they are.

In addition, the front screen 11a has the light-transmission property. Accordingly, light emitted from the organic EL luminescent layer 111a may be classified into light, which is to be launched to the side of the observer, and light, which is to be launched to the rear screen 12a. More specifically, the light in an amount of 50 % of the light emitted from the organic EL luminescent layer 111a is launched to the side of the observer, and the remaining light in an amount of 50 % is launched to the opposite side to the observer. The light, which is to be launched to the observer, is actually propagated to him/her as it is, thus leading to his/her visual recognition of the light. On the other hand, the light, which is to be launched to the opposite side to the observer, is actually transmitted through the substrate 112a into the optical adhesive 21a.

Here, the substrate 112a has the smaller refractive index than the optical adhesive 21a, with the result that the light launched to the optical adhesive 2 a is reflected on the boundary surface. If an angle of incidence of the light into the optical adhesive 21a is 90 degrees, the reflected light is propagated in the similar light path to the incident light. More specifically, the reflected light is propagated through the substrate 112a to the side of the observer. In this case, the pixels of which the organic EL luminescent layer 111a emit the light, and the light as reflected as mentioned above is launched to the above-mentioned pixels. It is therefore possible to utilize, without wasting, both of the lights, which have been emitted in the opposite directions from the organic EL luminescent layer 111a, although there is a slight attenuation of light during propagation in the substrate 112a, after being reflected by the optical adhesive 21a. This enables an observer to recognize visually the light emitted from the organic EL luminescent layer 111a in a state in which the original brightness, luminosity and amount of light for the image are kept as they are.

Consequently, the front and rear screens 11 a, 12a can display the images, utilizing effectively the light emitted from the organic EL luminescent layers 111a, 121a.

Now, description will be given below of the comparative example to the display apparatus 2 according to the example of the present invention, with reference to FIG. 3. In this comparative example, the two display units are held so as to be away from each other, without providing any structural component, which corresponds to the bonding layer 21 of the present invention, between these display units. More specifically, in the display apparatus according to the comparative example, the front screen 11a and the rear screen 12a are not bonded to each other by the optical adhesive 21a, but are spaced apart from each other so as to form an air space between the front and rear screens 11a, 12a. In this case, light emitted from the organic EL luminescent layer 121 a of the rear screen 12a is propagated through the air space and then launched to the substrate 112a of the front screen 11a. Here, the air space has a smaller refractive index than the substrate 112a, which is formed for example of glass, with the result that part of the light launched into the substrate 112a is reflected on the boundary surface between the substrate 112a and the air space, and on the other hand, only the remaining part of the light is then launched to the substrate 112a so as to be recognized visually by an observer. Accordingly, the observer recognizes visually the light emitted from the organic EL luminescent layer 121a in a state in which brightness, luminosity and amount of light have been varied. Such a comparative example disables an observer from recognizing visually the images to be displayed on the front and rear screens 11a, 12a, in an appropriately adjusted state, thus making it difficult or impossible to provide his/her visual recognition of the three-dimensional image.

According to the display apparatus 2 of the example of the present invention as shown in FIG. 2, it is possible to prevent the reflection of light, which is involved in the display apparatus of the comparative example, thus causing great advantageous effects. In addition, it is also possible to return the light, which has been launched to the opposite side to the observer, to the observer, thus providing an effective utilization of the light as emitted. It is therefore possible for the observer to recognize visually the images displayed on the respective front and rear screens 11 a, 12a in a superimposed state on his/her line of sight in an appropriately adjusted brightness, thus providing a proper visual recognition of the three-dimensional image.

According to the display apparatus 2 of the present invention as described above, bonding the front and rear screens 11a, 12a to each other by means of the optical adhesive 21a makes it possible to effectively utilize the lights emitted from the front and rear screens 11 a, 12a, without wasting, thus displaying the images. In addition, preventing the reflection of light on the substrate makes it possible for an observer to recognize visually the image, which is displayed especially on the rear screen 12a, under the conditions that the original brightness, luminosity and amount of light are kept as they are. According to the display apparatus 2 of the example of the present invention, the display apparatus for displaying the three-dimensional image can be achieved, thus providing excellent technical effects. Especially in the brightness modulation type three-dimensional display according to the above-described example of the present invention, no need to determine the brightness of each of the screens in view of variation in brightness due to the reflection of light facilitates the settings for achieving an appropriate three-dimensional display, thus providing additional advantageous effects.

In FIG. 2, the luminescent layer 111a (121a), the substrate 112a (122a) and the optical adhesive 21a have the respective certain sizes for convenience of comprehension of the present invention, which sizes have no relation with their actual sizes in the display apparatus according to the example of the present invention. For example, the optical adhesive 21 a may be prepared in the form of extremely thin film. Alternatively, it may be applied in the predetermined thickness.

### [Concrete example of the display apparatus]

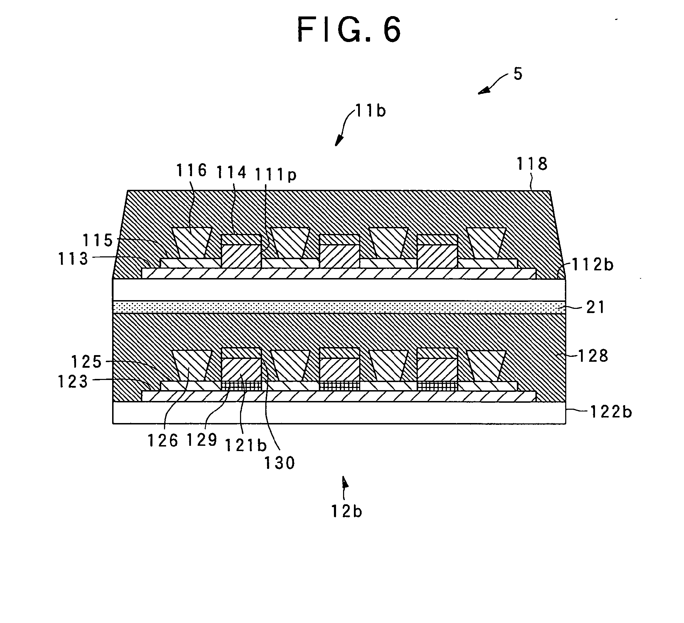

Now, description will be given below of the concrete example of the apparatus according to the example of the present invention with reference to FIGS. 4 to 6. FIG. 4 is a diagrammatic view illustrating the concrete example of the display apparatus, in which the organic EL display device is protected by a transparent glass sealing cover; FIG. 5 is a diagrammatic view illustrating the concrete example of the display apparatus, in which the organic EL display device is protected by a transparent sealing film, which is substituted by the above-mentioned transparent glass sealing cover; and FIG. 6 is a diagrammatic view illustrating the concrete example of the display apparatus, in which the top emission type organic EL display device is used as the rear screen 12. Only the front screen 11, the rear screen 12 and the bonding layer 21, which are extracted from the structural components as shown in FIG. 1, will be described in detail below.

The display apparatus 3 according to the example of the present invention has the structure as shown in FIG. 4. More specifically, the front screen 11b includes organic EL luminescent layer sections 111p, a substrate 112b, an ITO (indium tin oxide) electrode (i.e., anode) 113, transparent electrode (cathode) sections 114, an insulating film 115, cathode partition sections 116 and a transparent glass sealing cover 117. On the other hand, the rear screen 12b includes organic EL luminescent layer sections 121p, a substrate 122b, an ITO electrode (i.e., cathode) 123, metallic electrode (cathode) sections 124, an insulating film 125, cathode partition sections 126 and a transparent glass sealing cover 127.

Each of the organic EL luminescent layer sections 111 p (121p) includes a hole injection layer, a hole transporting layer, a luminescent layer, an electron transport layer and an electron injection layer, any one of which is not shown. The hole injection layer is formed for example of CuPc (copper phthalocyanine). The hole transporting layer is formed for example of NPB (N, N-di(naphthalene-1-yl)-N, N-diphenyl-benzidene). The luminescent layer is formed for example of Alq₃ (tris(8-hydroxyquinoline)aluminum). The electron transport layer is formed for example of BCP (bathocuproine). The electron injection layer is formed for example of LiF (lithium fluoride). Each of the above-mentioned organic EL luminescent layer sections 111p (121p) forms a single pixel of the front screen 11a or 12b. Each of the organic EL luminescent layer sections 111p (121p) may have the same size.

The substrate 112b (122b) not only holds the organic EL luminescent layer sections 111b (121b)) thereon, but also protects them. A glass plate is used as the substrate 112b (122b). A polymer film may be used as the substrate 112b (122b) in place of the glass plate. The substrate 112b has the smaller refractive index than the substrate 122b. It is however possible to cause the three-dimensional image at a certain permissible level, even when the substrate 112b has the smaller refractive index than the substrate 122b. In addition, any one of the substrates 112b, 122b have the same refractive index as the bonding layer 21.

The ITO electrode 113 (123) is the anode having the light-transmission property. An IZO (indium zinc oxide) electrode may be used in place of the ITO electrode as the anode. In the display apparatus 3 as shown in FIG. 4, it is preferable that the ITO electrode 113 has the same refractive index as the substrate 112b and the ITO electrode 123 has the same refractive index as the substrate 122b.

Each of the transparent electrode sections 114 is the cathode, which contains for example the IZO (indium zinc oxide) and has the light-transmission property. Alternatively, the transparent electrode section 114 may be an electrode section containing for example the IZO (indium zinc oxide) or a metallic electrode section having the thin film shape.

Each of the metallic electrode sections 124, which is formed of aluminum, causes the light emitted from the organic EL luminescent layer section 121p to be reflected to the side of the substrate 122b.

The insulating film 115 (125), which is formed for example of polyimide in order to avoid leak of current, is provided on the substrate 112b (122b) at the other positions than those where the organic EL luminescent layer sections 111 b (121p) are formed.

The cathode partition sections 116 (126) are formed on the insulating film 115 (125) at the other positions than those where the cathode sections are formed, by carrying out a patterning process to obtain a desired pattern during the formation of the cathode sections (i.e., the metallic electrode sections 124 or the transparent electrode sections 114).

The transparent glass sealing cover 117 (127) protects the above-described structural components from the external influence. The transparent glass sealing cover may be substituted by a transparent sealing film described later.

The front and rear screens 11b, 12b are placed on each other through the bonding layer 21, which is for example the optical adhesive, and bonded to each other. In this case, an alignment steps is carried out, with the use for example of an optical microscope, to align the pixels of the front screen 11b with the corresponding pixels of the rear screen 12b so that the pixel alignment of the organic EL luminescent layer sections 111 b of the front screen 11 b corresponds to the pixel alignment of the organic EL luminescent layer sections 121b of the rear screen 12b. In such a state, both the substrates 112b, 122b are bonded to each other.

Light emitted from the organic EL luminescent layer section 111b of the front screen 11b may be classified into two lights to be launched in the opposite directions, i.e., light to be launched to the side of an observer (i.e., the side of the transparent electrode section 114) and light to be launched to the opposite side to the observer (i.e., the side of the ITO electrode 113). The light, which is to be launched to the opposite side to the observer, is actually reflected on the boundary surface between the substrate 112b and the bonding layer 21 or the other boundary surface between the substrate 122b and the bonding layer 21, and then launched to the side of the observer.

Light emitted from the organic EL luminescent layer section 121 b of the rear screen 12b may also be classified into two lights to be launched in the opposite directions. The light, which is to be launched to the opposite side to the observer, is actually reflected on the metallic electrode section 124 and then launched to the side of the observer. The light, which is to be launched to the side of the observer, is actually launched to the side of the observer, as it is, without being reflected on the boundary surface between the substrate 122b and the bonding layer 21 or the other boundary surface between the substrate 121b and the bonding layer 21.

It is therefore possible to prevent the lights emitted from the organic EL luminescent layer sections 111b, 121b from reflecting on the substrates and from being attenuated. Accordingly, the emitted light is propagated toward the observer, without causing reflection. In addition, the light, which is to be launched to the opposite side to the observer, can be propagated effectively to the observer, without wasting. This enables the observer to recognize visually the images displayed on the organic EL luminescent layer sections 111b, 121b in a state in which the original brightness, luminosity and amount of light for the image are kept as they are.

Alternatively, each of the front and rear screens 11b, 12b may have a structure in which a transparent sealing film 118 (128) that is substituted for the glass sealing cover 117 (127) as shown in FIG. 5, covers the front screen 11b (the rear screen 12b) to protect it. In the display apparatus 4 according to the example of the present invention as shown in FIG. 5, use of the transparent sealing film 118 (128) makes it possible to reduce the thickness of the front and rear screens 11 b, 12b in comparison with the case utilizing the glass sealing cover 117 (127), thus providing an excellent property.

In FIGS. 4 and 5, the front screen 11b utilizes the transparent type organic EL luminescent display device and the rear screen 12b utilizes the bottom emission type organic EL luminescent display device. The present invention is not limited only to such a system.

Utilizing the top emission type organic EL display device in the rear screen 12b as in the display apparatus 5 as shown in FIG. 6 can also provide the same effects as the display apparatus according to the above-described examples. In this case, the rear screen 12b is provide with reflectors 129, which are formed for example of metallic panel so as to be disposed between the organic EL luminescent layer section 121p and the ITO electrode 123. The IZO (indium zinc oxide) electrode is used for the cathode 130 of the rear screen 12b, which is required to be light transmissible. In this case, the light emitted from the organic EL luminescent layer section 121p of the rear screen 12b is superimposed on the light emitted from the organic EL luminescent layer section 111p of the front screen 11b through the transparent sealing film 128, the bonding layer 21 and the substrate 112b, so as to be recognized visually by an observer. Making the refractive index of the transparent sealing film 128 larger than the refractive index of the substrate 112b and making the refractive index of the bonding layer 21 equal to the refractive index of any one of the substrate 112b and the transparent sealing film 128 make is possible to provide the same technical effects as the display apparatus 1, 2, 3 and 4 according to the example of the present invention.

The front screen 11b may have the structure in which the surface of the substrate 112b on which the organic EL luminescent layer 11 b is formed, is bonded to the rear screen 12b.

It is therefore possible to cause an observer to recognize visually the image without variation in image characteristics such as brightness, luminosity and amount of light, even when any type of organic EL display device is utilized.

In addition, substituting a flexible polymer film, which contains for example polycarbonate or polyethylene terephthalate, for the substrate 112b or 122b in the above-described organic EL display device, so as to place the above-mentioned organic EL luminescent layer sections 111p or 121p and the relevant components on the polymer film can provide the display apparatus having flexibility.

The present invention is not limited only to the display apparatus provided with the bonding layer 21 as described above. More specifically, even when the display apparatus is provided with no structural component corresponding to the bonding layer 21, bonding the substrate 111 of the front screen 11 and the substrate 121 of the rear screen 12 to each other as in the similar manner to the display apparatus according to the example of the present invention can provide the same technical effects as the display apparatus according to the example of the present invention.

In the above-described examples of the present invention, the organic EL display device is utilized for the example of the "display unit" of the present invention. The present invention is not limited only to such examples. Use of the other type of display device having the light-transmission property than the organic EL display device can provide the same technical effects.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. An apparatus for displaying a three-dimensional image an object to be displayed, through a superimposing of a plurality of images of said object, which are placed so as to be apart from each other on a line of sight of an observer, **characterized by** comprising:
a first display unit (12, 12a, 12b) having a first screen;
a second display unit (11, 11a, 11b) disposed so as to face said first display unit (12, 12a, 12b) , said second display unit (11, 11a, 11b) having a second screen, which is light-transmissible; and
a bonding member (21) for connecting said first display unit (12, 12a, 12b) and said second display unit (11, 11a, 11b) with each other, said bonding member having a light transmission property and being a bonding agent with which a space between said first display unit (12, 12a, 12b) and said second display unit (11, 11a, 11b) is filled.

2. The apparatus as claimed in Claim 1, wherein:
said first display unit (12, 12a, 12b) comprises:
a first substrate (122, 122a, 122b); and
a first luminescent layer (121a, 121b) formed on said first substrate (122, 122a, 122b), said first luminescent layer (121a, 121b) emitting light so as to provide said first screen; and
said second display unit (11, 11a, 11b) comprises:
a second substrate (112, 112a, 112b) having a light transmission property; and
a second luminescent layer (111a, 111b) formed on said second substrate (112, 112a, 112b), said second luminescent layer (111a, 111b) emitting light so as to provide said second screen.

3. The apparatus as claimed in Claim 2, wherein:
said bonding member (21) is disposed between said first display unit (12, 12a, 12b) and an opposite surface of said second substrate (112, 112a, 112b) to said second luminescent layer (111a, 111b), to bond said first display unit (12, 12a, 12b) and said second substrate (112, 112a, 112b) together.

4. The apparatus as claimed in Claim 3, wherein:
said first substrate (122, 122a, 122b) has a light transmission property; and
said bonding member (21) is disposed between said first display unit (12, 12a, 12b) and said second display unit (11, 11a, 11b) to cause an opposite surface of said first substrate (122, 122a, 122b) to said first luminescent layer (121 a, 121 b) and the opposite surface of said first substrate (122, 122a, 122b) to said first luminescent layer ( 121 a, 121b) to bond together.

5. The apparatus as claimed in any one of Claims 2 to 4, wherein:
said bonding member (21) has a same refractive index as that of at least one of said first substrate (122, 122a, 122b) and said second substrate (112, 112a, 112b).

6. The apparatus as claimed in any one of Claims 2 to 5, wherein:
said bonding agent is an optical adhesive.

7. An apparatus for displaying a three-dimensional image,
**characterized by** comprising:
a first display unit (12, 12a, 12b) comprising a first substrate (122, 122a, 122b) and a first luminescent layer (121a, 121b) formed on said first substrate (122, 122a, 122b) to emit light for displaying a first image;
a second display unit (11, 11a, 11b) comprising a second substrate (112, 112a, 112b), which is disposed to face said first substrate (122, 122a, 122b) and has a light transmission property, and a second luminescent layer (111a, 111b) formed on said second substrate (112, 112a, 112b) to emit light for displaying a second image to be superimposed on said first image,
wherein said first luminescent layer (121a, 121b) and said second luminescent layer (111a, 111b) are placed so as to be apart from each other on a line of sight of an observer, said first display unit (12, 12a, 12b) being joined to an opposite surface of said second substrate (112, 112a, 112b) to said second luminescent layer (111a, 111b).

8. The apparatus as claimed in Claim 7, wherein:
said first substrate has a light transmission property; and
said opposite surface of said second substrate (112, 112a, 112b) to said second luminescent layer (111 a, 111b) is joined to an opposite surface of said first substrate (122, 122a, 122b) to said first luminescent layer (121a, 121b).

9. The apparatus as claimed in any one of Claims 2 to 8, wherein:
said first substrate (122, 122a, 122b) has a larger refractive index than that of said second substrate (112, 112a, 112b).

10. The apparatus as claimed in any one of Claims 2 to 9, wherein:
at least one of said first substrate (122, 122a, 122b) and said second substrate (112, 112a, 112b) contains at least one of glass and plastic.

11. The apparatus as claimed in any one of Claims 1 to 10, wherein:
said first display unit (12, 12a, 12b) and said second display unit (11, 11a, 11b) are disposed on the line of sight of said observer so that pixels of the first display unit (12, 12a, 12b) correspond to pixels of said second display unit (11, 11a, 11b), respectively.

12. The apparatus as claimed in any one of Claims 1 to 11, wherein:
said second display unit (11, 11a, 11b) comprises an organic electroluminescence display device.

13. The apparatus as claimed in Claim 12, wherein:
said second substrate (112, 112a, 112b) comprises a polymer film.
